# EUROPÄISCHE PATENTSCHRIFT

(11) **EP 3 687 792 B1**
(45) Veröffentlichungstag und Bekanntmachung des Hinweises auf die Patenterteilung: **12.06.2024**
(21) Anmeldenummer: 18768886.6
(22) Anmeldetag: 12.09.2018
(51) Int. Cl.: B32B 17/10

(54) **FAHRZEUGSCHEIBE, FAHRZEUG UND VERFAHREN ZUR HERSTELLUNG**
VEHICLE GLAZING, VEHICLE AND METHOD FOR PRODUCING THE GLAZING
VITRE DE VÉHICULE, VÉHICLE ET PROCÉDÉ DE FABRICATION DE LA VITRE

(30) Priorität: 28.09.2017 EP 17192877
(43) Veröffentlichungstag der Anmeldung: 05.08.2020
(73) Patentinhaber: SAINT-GOBAIN GLASS FRANCE, 92400 Courbevoie (FR)
(72) Erfinder: VARGA, Gabor, 40211 Düsseldorf (DE); EFFERTZ, Christian, 52080 Aachen (DE); ZEISS, Michael, 52134 Herzogenrath (DE); KLAUSS, Bastian, 52072 Aachen (DE); FRANCOIS, Guillaume, 52064 Aachen (DE); KIZMAZ, Ali-Osman, 52146 Würselen (DE); KAPLAN, Benjamin, 52066 Aachen (DE)
(74) Vertreter: Gebauer, Dieter Edmund
(86) Internationale Anmeldenummer: PCT/EP2018/074553
(87) Internationale Veröffentlichungsnummer: WO 2019/057574

(56) Entgegenhaltungen:
- WO-A1-2013/091961
- CN-A- 101 087 135
- DE-A1-102004 050 344
- DE-A1-102009 053 465
- US-A1- 2005 233 125
- US-A1- 2006 275 599
- US-A1- 2009 039 901

## Beschreibung

Die Erfindung betrifft eine Fahrzeugscheibe nach Anspruch 1, ein Fahrzeug nach Anspruch 14 und ein Verfahren nach Anspruch 15.

Im Stand der Technik sind Fahrzeugscheiben mit Sensoren, beispielsweise aus

EP 2 121 308 B1, bekannt. Diese Sensoren können auch, wie in EP 2 121 308 B1 beschrieben, in die Fahrzeugscheibe integriert sein (zwischen einzelnen Schichten der Fahrzeugscheibe).

CN 101 087 135 A zeigt einen kapazitiven Feuchtigkeitssensor, wobei in einer Ausführungsform eine Kapazität innerhalb einer Fahrzeugscheibe integriert ist.

WO 2017/178 146 A1 beschreibt eine Verbundglasscheibe mit einer Sensoranordnung, die eine Empfangsantenne, eine Sendeantenne und eine Auswerteeinheit aufweist. Die Sensoranordnung ist zumindest teilweise zwischen der ersten und zweiten Glasschicht angeordnet.

WO 2013/091 961 A1 zeigt eine Verbundscheibe mit Antennenstruktur, wobei eine erste und zweite elektrisch leitfähige Struktur als Drähte, als aufgedruckte, leitfähige Strukturen oder als transparente leitfähige Beschichtungen ausgebildet sind.

US 2006/0 275 599 A1 beschreibt die Einsetzung von elektronischen Komponenten in eine Glasscheibe, vorzugsweise eine Verbundglasscheibe, wobei die elektronischen Komponenten als leitfähige Schichten, die nahezu unsichtbar sind, bereitgestellt werden.

DE 10 2009 053 465 A1 zeigt eine Funktionsscheibe mit zwei transparenten Scheiben und dazwischenliegenden elektrischen Funktionselementen, die über elektrische Leitungen miteinander verbunden sind.

US 2009/0 039 901 A1 beschreibt eine Scheibe mit einem kapazitiven Regendetektor, wobei der Regendetektor mit einem Material bereitgestellt ist, welches bei den vorgesehenen Dicken im Wesentlichen transparent ist. Des Weiteren wird der Einsatz von Abschirmungen bzw. Ummantelungen für elektrische Schaltkreise beschrieben, um Interferenzen auf den Sensor zu reduzieren.

DE 10 2004 050 344 A1 zeigt einen Regensensor, der in eine Kraftfahrzeugscheibe einlaminiert ist.

US 2005/0 233 125 A1 beschreibt eine laminierte Glasscheibe, wobei zwischen den Glasscheiben u.a. Lichtsensoren, kapazitive Sensoren, Dünnschichtbatterien oder transparente elektrische Leiter vorgesehen sein können.

Im Allgemeinen werden die bekannten Lösungen für Fahrzeugscheiben mit Sensoren als vergleichsweise störanfällig empfunden.

Ausgehend vom Stand der Technik ist es Aufgabe der Erfindung, eine Fahrzeugscheibe mit einer vergleichsweise geringen Störanfälligkeit vorzuschlagen. Gemäß einem weiteren Anspruch betrifft die Erfindung ein Fahrzeug.

Gemäß einem ersten Aspekt der Erfindung umfasst die Fahrzeugscheibe mindestens eine Transducer-Einrichtungmit einem Sensor, welche eine Kapazität umfasst, deren Kapazitätswert abhängig von äußeren Einflüssen schwankt, eine der Transducer-Einrichtungzugeordnete Transducer-Elektronik, wobei sowohl die Transducer-Einrichtung als auch die Transducer-Elektronik vollständig innerhalb der Fahrzeugscheibe angeordnet sind, und eine der Transducer-Einrichtung zugeordnete elektrische Abschirmungseinrichtung zur elektrischen Abschirmung der Transducer-Einrichtung gegenüber einem Fahrzeuginneren oder einem Fahrzeugäußeren, wobei die Transducer-Einrichtung und die Abschirmungseinrichtung zumindest abschnittsweise transparent sind.

Unter einem Transducer bzw. der Transducer-Einrichtung ist gemäß dem englischen Ursprung eine Einrichtung (beispielsweise Baugruppe oder Bauelement) zur Umwandlung einer Energieform in eine andere Energieform zu verstehen. In diesem Sinne kann Transducer als Wandler bzw. Energiewandler bezeichnet werden.

Erfindungsgemäß handelt es sich bei der Transducer-Einrichtung um eine Sensor-Einrichtung, insbesondere eine Feuchtigkeitssensor-Einrichtung. Die Sensor-Einrichtung umfasst eine Kapazität (bzw. Kondensator), deren (dessen) Kapazitätswert abhängig von äußeren Einflüssen schwankt (beispielsweise in der Anwesenheit von Wasser). Vorzugsweise wandelt die Transducer-Einrichtung ein Signal aus der Umwelt (z. B. Feuchtigkeit bzw. Wasser) in ein elektrisches Signal um.

Gemäß dem ersten Aspekt der Erfindung wird also insbesondere die Transducer-Elektronik vollständig innerhalb der Fahrzeugscheibe angeordnet. Im Stand der Technik (selbst wenn zumindest der entsprechende Sensor in die Fahrzeugscheibe integriert ist) wurde bisher die entsprechende (signalverarbeitende bzw. signalkonditionierende) Elektronik außen an die Windschutzscheibe oder in deren Nachbarschaft angebracht. Dabei wurde erfindungsgemäß erkannt, dass dadurch ein vergleichsweise langer Signalpfad von der Transducer-Einrichtung (beispielsweise dem Sensor) zu der Elektronik vorliegt und somit (unerwünschte) Interferenzen, parasitäre Effekte und Störungen auftreten können. Wenn jedoch gemäß der Erfindung die Elektronik vollständig in die Fahrzeugscheibe (beispielsweise Windschutzscheibe) integriert wird, kann diese näher an der Transducer-Einrichtung angeordnet werden, was die oben genannten Effekte minimiert. Je kürzer eine Distanz zwischen Transducer-Einrichtung und Transducer-Elektronik (insbesondere signalkonditionierender und/oder signalverarbeitender Elektronik) ist, desto robuster ist das Transducer-System (bzw. Sensor-System), da weniger Störungen in einen Leitungspfad eingekoppelt werden. Aus diesem Grund ist es vorteilhaft, wenn die gesamte Transducer-Elektronik (Auswerteelektronik), beispielsweise umfassend eine signalkonditionierende und/oder signalverarbeitende Elektronik, vorzugsweise einen Mikrocontroller und einen Treiber, in die Fahrzeugscheibe (z. B. Windschutzscheibe) integriert werden, insbesondere nahe an der Transducer-Einrichtung, so dass das System insgesamt vergleichsweise robust gegen elektromagnetische Störungen (z. B. EMP-Störungen, wobei EMP für *electro magnetic pulse* steht), parasitäre Kapazitäten, parasitäre Induktivitäten, parasitäre Widerstände und/oder Verlust einer Signalenergie bzw. Signalleistung.

Dabei wurde erfindungsgemäß auch berücksichtigt, dass Transducer-Einrichtungen, wie Sensor-Einrichtungen in Fahrzeugscheiben oftmals Output-Signale generieren, die eine vergleichsweise geringe Leistung haben und entsprechend leicht durch Umwelteinflüsse gestört werden können. Bei einem Sensor, der in eine Fahrzeugscheibe (Windschutzscheibe) einlaminiert ist, müssen dann im Stand der Technik Elektroden oder Verbindungsleitungen (die beispielsweise als flache Leitungen ausgeführt sind) den gesamten Pfad durch die Fahrzeugscheibe (Windschutzscheibe) bis an deren Rand und weiter (über eine entsprechende Verbindungsleitung) zu einer Fahrzeugschnittstelle geführt werden. Während eines derartigen langen Weges können gleich mehrere parasitäre Effekte auftreten, insbesondere hinsichtlich der Kapazität, des Widerstandes, einer Induktivität und einer elektromagnetischen Verträglichkeit (EMV). Im Falle eines kapazitiven Sensors in einer Windschutzscheibe, dessen Kapazität im Bereich von mehreren pF sein kann und dessen Kapazitätsänderung, verursacht durch die zu messende Größe, einige fF sein kann, bedeutet eine parasitäre Kapazität einer Verbindungsleitung von ggf. über 20 pF eine erhebliche Störung.

Vorzugsweise umfasst die Transducer-Elektronik (Auswerte- bzw. Ausleseelektronik) eine signalkonditionierende und/oder eine signalverarbeitende Komponente, vorzugsweise einen Verstärker und/oder Treiber (Treiberstufe) und/oder einen Wandler, insbesondere A/D-Wandler, und/oder einen Signalprozessor und/oder einen Mikrocontroller. Insbesondere eine Treiber-Stufe (oder Teile davon) kann in die Fahrzeugscheibe (z. B. Windschutzscheibe), beispielsweise innerhalb eines Pfades einer (flachen) Verbindungsleitung integriert werden, so dass insgesamt die Verbindungsleitungen vergleichsweise kurz gehalten werden können. Die Treiber-Stufe kann eine vergleichsweise hohe Eingangsimpedanz sowie eine vergleichsweise geringe Eingangskapazität aufweisen. Der Treiber bzw. die Treiberstufe kann dann eine Verbindungsleitung nach Außen (bezogen auf die Fahrzeugscheibe) mit vergleichsweise hoher Leistung und besseren treibenden Eigenschaften weiterführen. Die Treiberstufe weist vorzugsweise eine vergleichsweise gute Rückwärtsisolierung *(backwardisolation)* auf, so dass nachfolgende Störungen nicht rückwärts zu der Transducer-Einrichtung propagieren können und damit deren Output ändern können. Weiterhin können Teile einer signalverarbeitenden Elektronik, wie beispielsweise ein Mikrocontroller und eine Fahrzeug-Schnittstelle in die Fahrzeugscheibe (insbesondere Windschutzscheibe) integriert werden (oder eine solche Elektronik in ihrer Gesamtheit). Insgesamt wird eine Messung mit vergleichsweise hoher Empfindlichkeit und Robustheit erreicht. Unter einem Treiber ist insbesondere ein Leitungsverstärker (Leitungstreiber) bzw. Extender zu verstehen, der eine Qualität des zu übertragenden Signals verbessert und ggf. das zu übertragende Signal verstärkt.

In einer konkreten Ausführungsform kann in die Fahrzeugscheibe die kapazitive Sensor-Einrichtung, ein Verstärker, ein A/D-Wandler sowie ein Mikrocontroller integriert sein (beispielsweise zwischen einer äußeren und einer inneren Scheibe bzw. einer ersten und einer zweite Scheibe, ggf. auf einer Ebene). Verstärker, A/D-Wandler und Mikrocontroller können auf bzw. an einer (flachen) elektrischen Verbindungsleitung angeordnet werden.

Gemäß der vorliegenden Erfindung umfasst die Fahrzeugscheibe weiterhin eine der Transducer-Einrichtung zugeordnete elektrische Abschirmungseinrichtung zur elektrischen Abschirmung der Transducer-Einrichtung gegenüber einem Fahrzeug-Inneren oder einem Fahrzeug-Äußeren (bzw. bezogen auf die Fahrzeugscheibe per se nach außen).

Unter einer elektrischen Abschirmungseinrichtung ist insbesondere eine Einrichtung zu verstehen, die elektrisch leitend ausgebildet ist (beispielsweise aus Metall) und insofern ein elektromagnetisches Feld bzw. elektromagnetische Feldlinien blockiert. Grundsätzlich (wie oben bereits erläutert) können Transducer-Einrichtungen, insbesondere kapazitive Transducer-Einrichtungen bzw. Transducer-Strukturen in eine Fahrzeugscheibe (beispielsweise zwischen zwei Einzelscheiben der Fahrzeugscheibe) integriert werden. Oftmals handelt es sich bei einer solchen Fahrzeugscheibe um eine Windschutzscheibe. Derartige Transducer-Einrichtungen, insbesondere Sensor-Einrichtungen, können äußere Bedingungen, wie beispielsweise Regen auf der Fahrzeugscheibe (Windschutzscheibe) messen. Die Permittivität von Wasser ist erheblich höher als diejenige von Luft, so dass sich die Kapazität des Sensors ändert, wenn die Fahrzeugscheibe (Windschutzscheibe), beispielsweise an ihrer Außenseite, feucht oder nass wird. Entsprechend kann die Transducer-Einrichtung (Sensor-Einrichtung) so konfiguriert sein, dass eine Messung von Wasser aufgrund einer Kapazitätsänderung festgestellt wird.

Im Allgemeinen kann die Transducer-Einrichtung vorzugsweise innerhalb eines Wischbereichs einer Windschutzscheibe angeordnet sein, also eines Bereichs, der von Scheibenwischern der Windschutzscheibe (oder entsprechend Heckscheibe) abgedeckt wird. Dadurch kann auch ein Wegwischen des Wassers durch die Transducer-Einrichtung (Sensor-Einrichtung) festgestellt werden.

Die Performance von Transducer-Einrichtungen in einer Fahrzeugscheibe (insbesondere einer kapazitiven Sensor-Einrichtung) kann durch Hinzufügen der Abschirmungseinrichtung (die insbesondere als eine leitfähige Schicht ausgebildet sein kann) erhöht werden.

Die Abschirmungseinrichtung (insbesondere leitfähige Schicht) kann auf einer äußeren Oberfläche (beispielsweise einer Fahrzeugscheiben-Innenfläche oder einer Fahrzeugscheiben-Außenfläche) angeordnet sein. In einer konkreten Ausführungsform ist die Abschirmungseinrichtung auf einer Innenfläche der Fahrzeugscheibe, die in Richtung Fahrzeuginsassen ausgerichtet ist, vorgesehen. Die Abschirmungseinrichtung (leitfähige Schicht) kann ausführungsgemäß die Transducer-Einrichtung zumindest teilweise (ggf. vollständig) überdecken. Unter einem teilweisen (oder vollständigen) Überdecken ist insbesondere zu verstehen, dass die Abschirmungseinrichtung in einer Draufsicht auf die Innen- bzw. Außenseite der Fahrzeugscheibe (Windschutzscheibe) die Transducer-Einrichtung (teilweise oder vollständig) verdeckt.

Die Abschirmungseinrichtung kann elektrisch isoliert sein (in dem Sinne, dass sie mit keiner weiteren Komponente der Fahrzeugscheibe bzw. des Fahrzeugs verbunden ist). Alternativ kann die Abschirmungseinrichtung auf Erdepotential oder auf einer Versorgungsspannung oder auf einem sonstigen (ggf. erdähnlichen, optional konstanten) Bezugspotential gehalten werden.

Die Abschirmungseinrichtung (leitfähige Schicht) ist zumindest abschnittsweise transparent.

Weiterhin kann die leitfähige Schicht auf einer Oberfläche, insbesondere innere Oberfläche, der Fahrzeugscheibe abgeschieden werden oder auf diese Oberfläche geklebt werden.

Insgesamt wird durch die Abschirmungseinrichtung (insbesondere leitfähige Schicht) im Hinblick auf die Transducer-Einrichtung (Sensor-Einrichtung) erreicht, dass die Sensitivität der Transducer-Einrichtung (Sensor-Einrichtung) verbessert wird, da Feldlinien, die in Richtung einer Seite der Fahrzeugscheibe (insbesondere Innenseite) verlaufen, durch die Abschirmungseinrichtung (leitfähige Schicht) verkürzt werden. Beispielsweise bei einer Feuchtigkeitsmessung können dann Feldlinien, die nach außen verlaufen und letztlich für die Feuchtigkeitsdetektion verantwortlich sind, die Gesamt-Kapazität zu einem vergleichsweise großen Anteil beeinflussen. Weiterhin können Einflüsse, die für die Messung nicht entscheidend sind bzw. diese verfälschen können, insbesondere an einer Innenseite, wie beispielsweise eine von Innen beschlagene Fahrzeugscheibe (von innen) oder Luftfeuchtigkeit (in einem Innenraum), ein Fahrzeuginsasse (beispielsweise dessen Hand), verringert werden. Weiterhin kann die Abschirmungseinrichtung (leitfähige Schicht) insbesondere die Transducer-Einrichtung (Sensor-Struktur) von elektromagnetischen, elektrostatischen und permittivitäts-ändernden Effekten (insbesondere von innen) abschirmen, was die Messung vergleichsweise robust macht. Dadurch kann auf effektive Art und Weise, beispielsweise, ein Regensensor die Scheibenwischer (außen an der Fahrzeugscheibe) steuern.

Die Transducer-Einrichtung (beispielsweise Sensor-Struktur) kann mittels Auflaminieren, Aufdrucken oder Abscheiden auf eine Fläche einer Einzelscheibe der Fahrzeugscheibe aufgebracht sein.

Die Abschirmungseinrichtung kann durch Laminieren, Aufdrucken oder Abscheiden auf eine freie Oberfläche (z. B. nach innen weisende Oberfläche) der Fahrzeugscheibe auflaminiert, aufgedruckt oder abgeschieden werden. Bei nichtbeschichtetem Glas kann (Silber-) Druck oder (Antennen-) Folienkaschierung durchgeführt werden. Bei beschichtetem Glas kann (Silber-) Druck, Lasern oder eine (Antennen-) Folienkaschierung eingesetzt werden.

Die Abschirmungseinrichtung ist insbesondere nicht als (zusätzliche) kapazitive Struktur, beispielsweise für ein differentielles Messen (Auslesen) ausgeführt, sondern vorzugsweise als Abschirmplatte (Abschirmschicht), die beispielsweise mit Erdpotential oder einem anderen Potential verbunden ist, aber nicht zum Auslesen herangezogen wird.

Die elektromagnetische Abschirmungseinrichtung erstreckt sich vorzugsweise nicht über größere Bereiche der Fahrzeugscheibe (beispielsweise über die gesamte Fahrzeugscheibe), sondern über Bereiche, in denen die Transducer-Einrichtung angeordnet ist. Insofern kann sich die Abschirmungseinrichtung über eine Fläche erstrecken, die mindestens so groß ist, wie eine Fläche der Transducer-Einrichtung oder zumindest Bestandteile derselben (wie beispielsweise eine Kapazität, insbesondere eine als auf- bzw. eingebrachte Schicht ausgebildete Kapazität) oder maximal 5-mal, oder maximal 3-mal oder maximal 1,5-mal so groß, wie die Transducer-Einrichtung (bzw. ein einzelnes Element der Transducer-Einrichtung, wie vorzugsweise eine Kapazität derselben). Bezogen auf die gesamte Fahrzeugscheibe erstreckt sich die Abschirmungseinrichtung vorzugsweise über weniger als 10 %, vorzugsweise weniger als 5 % einer Gesamt-Fläche. Ggf. kann sich die Abschirmung auch über die ganze Scheibe erstrecken.

Insgesamt wird die Robustheit der Transducer-Einrichtung vergrößert. Weiterhin wird die Sensitivität der Transducer-Einrichtung durch Abschirmen gegenüber unerwünschten (insbesondere inneren) Effekten und dadurch, dass die Mehrheit der Feldlinien in die gewünschte Richtung (beispielsweise einer äußeren Oberfläche bzw. einer nach außen, weg vom Fahrzeuginneren, gerichteten Oberfläche der Fahrzeugscheibe) geführt werden, verbessert. Eine Messung entsprechender Transducer-Einrichtungen, die zumindest teilweise in einer Fahrzeugscheibe (Windschutzscheibe) integriert sind, insbesondere kapazitiver Sensor-Einrichtungen, sind dann vergleichsweise wenig anfällig gegenüber ungewollten Einflüssen (beispielsweise aus dem Fahrzeuginneren) und vergleichsweise sensitiv gegenüber den gewünschten Einflüssen (beispielsweise von außen). Dies kann insbesondere dadurch erreicht werden, dass die Abschirmungseinrichtung auf eine äußere Oberfläche (beispielsweise eine dem Fahrzeuginneren zugewandte Oberfläche der Fahrzeugscheibe, insbesondere Windschutzscheibe) aufgebracht wird, vorzugsweise als zusätzliche Schicht, insbesondere in Form eines leitfähigen Films.

Die elektrische Abschirmungseinrichtung kann auf einer Innenseite oder einer Außenseite der Fahrzeugscheibe angeordnet sein, vorzugsweise die Transducer-Einrichtung zumindest teilweise überdeckend.

Gemäß der vorliegenden Erfindung kann des Weiteren eine Fahrzeugscheibe vorgesehen sein umfassend weiterhin eine der Transducer-Einrichtung zugeordnete Kompensationseinrichtung, wobei die Kompensationseinrichtung zumindest teilweise innerhalb der Fahrzeugscheibe angeordnet ist.

Die Kompensationseinrichtung umfasst vorzugsweise eine (oder mehrere) Kapazität(en). Die Kapazität(en) wird (werden) vorzugsweise durch leitfähige (insbesondere metallische) Schichten bereitgestellt, die im Inneren der Fahrzeugscheibe (insbesondere zwischen zwei Einzelscheiben) angeordnet (aufgebracht) sind.

In einer Ausführungsform kann die Kompensationseinrichtung (insbesondere deren Schichten) auf einer Ebene mit der Transducer-Einrichtung (insbesondere deren Schichten) angeordnet sein. In einer alternativen Ausführungsform kann die Kompensationseinrichtung in einer Ebene angeordnet sein, die gegenüber einer Ebene, in der die Transducer-Einrichtung (insbesondere deren Schichten) angeordnet ist, beabstandet ist.

Die Kompensationseinrichtung kann gleichzeitig eine (insbesondere die oben beschriebene) Abschirmungseinrichtung ausbilden oder eine solche umfassen. Unter einer Kompensationseinrichtung ist insbesondere eine Einrichtung zu verstehen, die eine Vergleichsmessung ermöglicht, so dass unerwünschte Messeinflüsse kompensiert werden können, insbesondere durch differentielles Auswerten (Auslesen). Grundsätzlich (abgesehen von der erfindungsgemäßen Anordnung zumindest teilweise innerhalb der Fahrzeugscheibe) kann die Kompensationseinrichtung, wie in CN 100 571 035 C beschrieben, ausgebildet sein und/oder wirken.

Durch die Kompensationseinrichtung können insbesondere Veränderungen in der Fahrzeugscheibe und/oder weiter entfernt davon festgestellt werden und entsprechend berücksichtigt (kompensiert) werden. Die Kompensationseinrichtung ist insbesondere als Kapazität (Kondensator) ausgebildet, wobei die Kapazität (der Kondensator) zwei leitfähige Schichten umfasst. Gegebenenfalls kann die Kompensationseinrichtung auch nur eine leitfähige Schicht aufweisen, die dann in Zusammenwirken mit einer leitfähigen Schicht der Transducer-Einrichtung eine Kompensation ermöglicht.

Insgesamt kann die Robustheit und Sensitivität der Transducer-Einrichtung (insbesondere einer kapazitiven Struktur) durch eine differentielle Mess-Struktur (bzw. mittels der Kompensationseinrichtung) verbessert werden. Dadurch kann eine Messung von Bedingungen an einer Oberfläche (insbesondere einer äußeren, vom Fahrzeuginneren wegweisenden Oberfläche) der Fahrzeugscheibe verbessert werden. Ggf. kann aufgrund der Kompensationseinrichtung eine Sensitivität gegenüber Temperatur- und Feuchtigkeitsänderungen weiter entfernt von der Oberfläche verbessert werden. Insbesondere kann die Kompensationseinrichtung (Referenz-Struktur) so konfiguriert werden, dass sie eine Sensitivität von Feuchtigkeit in einer größeren Entfernung von der Fahrzeugscheibe auf dieselbe Art und Weise fühlt wie die Transducer-Einrichtung, wohingegen die Sensitivität an der Oberfläche der Fahrzeugscheibe (insbesondere einer vom Fahrzeuginneren wegweisenden Außenfläche) geringer oder sogar vernachlässigbar ist (also zumindest annähernd gleich null ist). Dadurch kann insgesamt die Sensitivität in Bezug auf eine weit entfernte Feuchtigkeit unterdrückt werden, wohingegen eine Sensitivität im Hinblick auf die Außenfläche unbeeinflusst bleibt (aufgrund eines, insbesondere differentiellen, Auswertens von beiden Strukturen, also sowohl der Transducer-Einrichtung als auch der Kompensationseinrichtung).

Vorzugsweise ist die Transducer-Einrichtung konfiguriert, um sowohl die Bedingung (z. B. eine Feuchte) unmittelbar an der Fahrzeugscheibe (Windschutzscheibe) festzustellen, als auch in einer Entfernung davon (von beispielsweise mehr als 1 cm, insbesondere mehr als 10 cm), wohingegen die Kompensationseinrichtung konfiguriert ist, zumindest im Wesentlichen nur die Bedingungen in der weiteren Entfernung zu messen. Durch differentiellen Vergleich können dann die Bedingungen weiter entfernt von der Transducer-Einrichtung herausgerechnet werden.

Es wird weiterhin eine Fahrzeugscheibe vorgeschlagen, umfassend mindestens die Transducer-Einrichtung sowie der Transducer-Einrichtung zugeordnete elektrische Anschlussleitungen (Elektroden), wobei die elektrischen Anschlussleitungen zumindest abschnittsweise einen vergrößerten Abstand zueinander aufweisen.

Der vergrößerte Abstand kann vorzugsweise dadurch erzielt werden, dass sich die Anschlussleitungen über ihren Verlauf abschnittsweise voneinander entfernen (ggf. darauffolgend wieder aneinander annähern). Alternativ oder zusätzlich kann der vergrößerte Abstand dadurch erzielt werden, dass mindestens eine Anschlussleitung von einem Ende des leitenden Abschnitts der Transducer-Einrichtung beabstandet mit dem leitenden Abschnitt kontaktiert ist. Bei dieser Alternative wird also eine Kontaktierung nicht an einem (eigentlich, ohne Berücksichtigung der Erfindung, sinnvollerweise dafür verwendbaren) Ende des leitenden Abschnitts angeordnet, sondern beabstandet davon. Der Abstand kann beispielsweise mindestens 20 %, weiter vorzugsweise mindestens 50 % eines maximal möglichen Abstandes auf dem entsprechenden leitenden Abschnitt (Leiter) der Transducer-Einrichtung, wie beispielsweise einer entsprechenden leitenden Schicht sein. Liegen mehrere Enden, beispielsweise mindestens zwei oder mindestens drei oder mindestens fünf Enden des leitenden Abschnitts (der leitenden Schicht) vor, gilt die obige Beabstandungs-Regel vorzugsweise für sämtliche dieser Enden.

Der vergrößerte Abstand kann mindestens 2 mm, weiter vorzugsweise mindestens 10 mm, noch weiter vorzugsweise mindestens 20 mm, betragen.

Ein Kerngedanke liegt darin, dass abschnittsweise ein vergrößerter (eigentlich für die Signal- bzw. Stromleitung nicht notwendiger) Abstand zwischen den Anschlussleitungen eingestellt wird. Dabei wurde erkannt, dass sich nicht nur eine Sensitivität (insbesondere Kapazität) der eigentlichen Transducer-Einrichtung bei sich ändernden äußeren Bedingungen ändern kann, sondern auch entsprechende Anschlussleitungen (Elektroden), die die Transducer-Einrichtung beispielsweise mit einer Transducer-Elektronik, innerhalb oder außerhalb der Fahrzeugscheibe verbinden. Diese können eine parasitäre (kapazitive) Struktur ausbilden, mit elektrischen Feldlinien außerhalb der Fahrzeugscheibe. So kann beispielsweise Wasser in der Nähe der Anschlussleitungen (Elektroden) die Gesamtkapazität der gesamten Struktur ändern. Insbesondere ist es so, dass der Bereich der Fahrzeugscheibe (Windschutzscheibe), in dem die Anschlussleitungen (Elektroden) platziert sind, nicht (notwendigerweise) in dem Bereich (beispielsweise einem Bereich von Scheibenwischern) angeordnet sein muss, dessen Änderung festgestellt werden soll (beispielsweise inwiefern das Wasser durch die Scheibenwischer weggewischt worden ist). Dadurch können die Anschlussleitungen (Elektroden) per se nicht (zwingend) als Teil einer funktionalen Transducer-Einrichtung (Sensor-Einrichtung) angesehen werden. Vielmehr müssen die Anschlussleitungen (im Allgemeinen) als unerwünschte parasitäre Beeinflussung (Kapazität) angesehen werden, die einen entsprechenden Fehler in der Messung bewirken können.

Dadurch wird nun die Performance der Transducer-Einrichtung (insbesondere der kapazitiven Sensor-Einrichtung) verbessert, dass eine parasitäre Beeinflussung (Kapazität) der Anschlussleitungen (Elektrodenstrukturen) dadurch verringert wird, dass deren Entfernung vergleichsweise groß eingestellt wird (zumindest bis sie eine weitere Komponente, insbesondere Transducer-Elektronik, vorzugsweise Auswerteelektronik, erreichen). Bei einer Transducer-Einrichtung, die zwei parallel verlaufende (flache) leitfähige Schichten umfasst, verlaufen die Anschlussleitungen vorzugsweise nicht mit den elektrischen Schichten fluchtend und/oder (im geometrischen Sinne) parallel zueinander, sondern entfernen sich abschnittsweise voneinander (beispielsweise in einem Bereich, in dem sie kontaktiert sind), insbesondere in eine Richtung senkrecht zu einem Verlauf der elektrischen Schichten.

Bei einer Transducer-Einrichtung, die eine innere (z. B. kreisförmige) Struktur aufweist und eine äußere (z. B. ringförmige), eine Unterbrechung aufweisende Struktur (leitfähige Schicht) aufweist, kann die elektrische Anschlussleitung für die äußere Struktur (Schicht) entfernt von einem Ende der äußeren Schicht (das an die Unterbrechung angrenzt) angeordnet sein (beispielsweise um mindestens 10 %, vorzugsweise mindestens 20 % eines maximal möglichen Abstandes; bezogen auf beide Enden, die jeweils an die Unterbrechung angrenzen). Alternativ oder zusätzlich können sich bei einer derartigen Ausführungsform die Anschlussleitungen voneinander entfernen (ggf. bis sie eine weitere elektrische Komponente, wie insbesondere Transducer-Elektronik erreichen).

In einer Ausführungsform, die zwei leitfähige Schichten aufweist, die rechenartig ineinandergreifen (ohne sich leitend zu berühren), kann ein Kontakt für eine Anschlussleitung einer der leitenden Schichten entfernt von einem (der bei einer rechenartigen Ausführung mehreren Enden) beabstandet sein bzw. von allen Enden entsprechend beabstandet sein (um mindestens 10 %, vorzugsweise mindestens 20 % eines maximal möglichen Abstandes, insbesondere bezogen auf sämtliche Enden).

Der vergrößerte Abstand ist insbesondere ein Abstand, der größer ist als ein durch den Abstand von zwei leitfähigen Strukturen (leitfähigen Schichten) vorgegebener potentieller Mindestabstand für elektrische Anschlussleitungen an dem Ort ihrer Kontaktierung mit den leitenden Strukturen (Schichten), vorzugsweise mindestens 1,2-mal, weiter vorzugsweise mindestens 2-mal noch weiter vorzugsweise mindestens 5-mal so groß ist wie ein derartige Mindestabstand. Vorzugsweise beträgt ein Abstand zwischen den beiden (involvierten) Kontaktierungsstellen (also eine Kontaktierungsstelle an einem ersten Leiter bzw. einer ersten leitfähigen Schicht und eine zweite Kontaktierungsstelle an einem zweiten Leiter bzw. einer zweiten leitfähigen Schicht) mindestens 20 %, vorzugsweise mindestens 50 % eines maximal möglichen Abstandes.

Die Transducer-Einrichtung kann zwischen zwei Schichten, insbesondere zwei übereinander angeordneten Einzelscheiben, der Fahrzeugscheibe angeordnet sein.

Die Transducer-Elektronik kann zwischen zwei Schichten, insbesondere zwei übereinander angeordneten Einzelscheiben, der Fahrzeugscheibe angeordnet sein.

Die Kompensationseinrichtung kann zwischen zwei Schichten, vorzugsweise zwei übereinander angeordneten Einzelscheibe, der Fahrzeugscheibe angeordnet sein. Die Abschirmungseinrichtung kann zwischen zwei Schichten, insbesondere zwei übereinander angeordneten Einzelscheiben, der Fahrzeugscheibe angeordnet sein.

Die Transducer-Einrichtung umfasst vorzugsweise einen Feuchtigkeitssensor.

Der Sensor der Transducer-Einrichtung ist zumindest abschnittsweise transparent und an einer beliebigen Position und/oder mit einer beliebigen Größe ausgestaltbar sein.

Insbesondere kann der Sensor auch über die gesamte, durchsichtige Erstreckung der Fahrzeugscheibe hinweg angeordnet werden, wobei keine wesentliche qualitative Beeinträchtigung eines Sichtbereiches der Fahrzeugscheibe vorliegt.

In diesem Sinne kann auch die Größe bzw. Flächengröße bzw. die Erstreckung des Sensors beliebig ausgestaltbar sein. So ist eine Sensitivität bzw. die aktive Oberfläche zweckmäßig vergrößerbar bzw. die Sensitivität des Sensors zweckmäßig optimierbar. Bei Ausgestaltung des Sensors beispielsweise als ein Regensensor kann aufgrund der vergrößerten bzw. vergrößerbaren Sensorfläche eine optimierte Reaktion auf insbesondere wechselnde Umgebungsbedingungen erfolgen.

Die Transducer-Einrichtung kann eine, genau zwei oder mehr elektrisch leitende Schichten aufweisen. Die zwei oder mehr elektrisch leitenden Schichten können voneinander isoliert sein. Die zwei oder mehr elektrisch leitenden Schichten können in einer Ebene oder verschiedenen Ebenen angeordnet sein. Ausführungsgemäß kann die Transducer-Einrichtung eine Kapazität umfassen, wobei die Kapazität vorzugsweise zwei elektrisch leitende Schichten umfasst (die voneinander isoliert sind).

Die Kompensationseinrichtung kann eine, zwei oder mehr leitende Schichten umfassen. Die zwei oder mehr elektrisch leitenden Schichten können voneinander isoliert sein. Die zwei oder mehr elektrisch leitenden Schichten können in einer Ebene oder verschiedenen Ebenen angeordnet sein. Die Kompensationseinrichtung kann eine Kapazität (Kondensator) umfassen, wobei die Kapazität vorzugsweise zwei elektrisch leitende Schichten umfasst (die voneinander isoliert sind).

Die Abschirmungseinrichtung kann mindestens eine oder zwei oder mehr elektrisch leitende Schichten umfassen. Die zwei oder mehr elektrisch leitenden Schichten können voneinander isoliert sein. Die zwei oder mehr elektrisch leitenden Schichten können in einer Ebene oder verschiedenen Ebenen angeordnet sein.

Die jeweilige elektrisch leitende Schicht kann als Metallschicht (beispielsweise aufgedruckt, abgeschieden oder auflaminiert) ausgebildet sein. Es ist vorgesehen, dass die Kompensationseinrichtung, insbesondere zumindest deren leitfähige Schichten, zumindest abschnittsweise transparent ist.

Die Transducer-Einrichtung und/oder die Transducer-Elektronik und/oder die Kompensationseinrichtung und/oder die elektrische Abschirmungseinrichtung und/oder (die) elektrische(n) Anschlussleitung(en), insbesondere zumindest deren leitfähige Schichten, können zumindest teilweise durch Beschichten und/oder Aufdrucken und/oder Abscheiden und/oder Strukturieren, z. B. mittels Laser und/oder einer Maskierung, und/oder durch Hineinlegen eines vorher beschichteten und/oder strukturierten Einlegers, z. B. einer PET Folie, die vorzugsweise beschichtet, ggf. die entsprechende Schicht darauf z.B. mit Laser strukturiert, und dann vorzugsweise als fertiger Einleger in die Scheibe einlaminiert wird, hergestellt sein.

Die Fahrzeugscheibe ist vorzugsweise eine Fahrzeugfensterscheibe, insbesondere eine Windschutzscheibe oder alternativ eine Heckscheibe.

Die oben genannte Aufgabe wird weiterhin gelöst durch ein Fahrzeug, insbesondere Kraftfahrzeug, vorzugsweise Personen- oder Lastkraftwagen oder Bus, oder Zug oder Schiff, umfassend eine Fahrzeugscheibe der obigen Art.

Unter einem elektrisch isolierenden Material ist insbesondere ein Material zu verstehen, das bei Raumtemperatur (25 °C) eine elektrische Leitfähigkeit von weniger als 10⁻¹ S · m⁻¹ (ggf. weniger als 10⁻⁸ S · m⁻¹) aufweist. Entsprechend ist unter einem elektrischen Leiter bzw. einem Material (oder Beschichtung) mit elektrischer Leitfähigkeit ein Material zu verstehen, das eine elektrische Leitfähigkeit von vorzugsweise mindestens 10 S · m⁻¹, weiter vorzugsweise mindestens 10³ S·m⁻¹ (bei Raumtemperatur von insbesondere 25 °C) beträgt.

Die Fahrzeugscheibe (insbesondere Windschutzscheibe) kann eine erste Scheibe (Außenscheibe) und eine zweite Scheibe (Innenscheibe) umfassen, die ggf. über eine vorzugsweise thermoplastische Zwischenschicht, vorzugsweise auf Basis von Polyvinylacetal, insbesondere Polyvinylbutyral miteinander verbunden sind.

Die Fahrzeugscheibe (Windschutzscheibe) ist dabei vorzugsweise vorgesehen, in einer Fensteröffnung eines Fahrzeugs den Innenraum gegenüber der äußeren Umgebung abzutrennen. Mit Innenscheibe wird die dem Innenraum (Fahrzeuginnenraum) zugewandte Scheibe der Verbundscheibe bezeichnet. Mit Außenscheibe wird die der äußeren Umgebung zugewandte Scheibe bezeichnet.

Die Fahrzeugscheibe (Außenscheibe und/oder Innenscheibe) enthält vorzugsweise Glas, ggf. Kalk-Natron-Glas. Die Fahrzeugescheibe (Außenscheibe und/oder Innenscheibe) kann (können) grundsätzlich auch andere Glassorten enthalten, wie Quarzglas oder Borosilikatglas. Oder auch starre klare Kunststoffe, insbesondere Polykarbonat oder Polymethylmethacrylat.

Die (thermoplastische) Zwischenschicht enthält vorzugsweise zumindest ein thermoplastisches Polymer, bevorzugt Ethylenvinylacetat (EVA), Polyvinylbutyral (PVB) oder Polyurethan (PU) oder Geschmische oder Copolymere oder Derivate davon, besonders bevorzugt PVB. Eine minimale Dicke der (thermoplastischen) Verbindung (Verbindungsfolie) beträgt vorzugsweise 0,2 mm bis 2 mm, weiter vorzugsweise 0,3 mm bis 1 mm. Mit minimaler Dicke wird die Dicke an der dünnsten Stelle der Zwischenschicht bezeichnet.

Die (thermoplastische) Zwischenschicht kann durch eine thermoplastische Verbindungsfolie (ggf. in variabler Dicke) ausgebildet sein.

Insgesamt können mehrere Zwischenschichten (zwischen Außenscheibe und Innenscheibe), beispielsweise mindestens zwei oder mehr Zwischenschichten (oder entsprechende Folien) ausgebildet sein.

Die Zwischenschicht kann auch aus einer akustischen Folie ausgebildet sein, die eine geräuschdämpfende Wirkung hat, oder eine solche Folie enthalten. Solche Folien können aus mindestens drei Lagen bestehen, wobei die mittlere Lage eine höhere Plastizität oder Elastizität aufweisen kann als die umgebenden äußeren Lagen, beispielsweise infolge eines höheren Anteils an Weichmachern.

Gemäß einem weiteren Aspekt der Erfindung ist ein Verfahren zu Herstellung der Fahrzeugscheibe vorgesehen, welches die folgenden Schritte aufweist:
- Bereitstellen der zwei übereinander anzuordnenden Einzelscheiben und einer dazwischen anzuordnenden Zwischenschicht;
- Aufdrucken einer transparenten, leitfähigen Tintenschicht zur Ausbildung einer kapazitiven Sensoranordnung auf wenigstens eine Seite der Zwischenschicht;
- Kontaktieren der transparenten, leitfähigen Tintenschicht mit einem elektrischen Leiter, insbesondere Anschließen eines Flachverbinders mittels einem elektrisch leitfähigen Klebeelement; und
- Übereinander anordnen und laminieren der Einzelscheiben und der dazwischen vorgesehenen Zwischenschicht, zur Ausbildung der Fahrzeugscheibe.

Es ist vorgesehen den Sensor als einen transparenten Sensor auszubilden.

Bevorzugter Weise wird der Sensor als ein Regensensor ausgebildet. In diesem Zusammenhang kann die Ausbildung einer vollständigen kapazitiven Sensoranordnung in transparenter Form vorgesehen sein, die auch die Transducer-Einrichtung oder anderweitige Strukturen aufweisen kann. Es ist eine beliebige Position des Sensors bzw. der Sensoranordnung in beliebiger Größe entlang der Fahrzeugscheibe verfügbar, ohne das eine wesentliche qualitative Beeinträchtigung der Fahrzeugscheibe, insbesondere des Sichtbereiches der Fahrzeugscheibe, vorliegt.

Des Weiteren wird die transparente, leitfähige Tintenschicht bzw. Farbschicht mit einem elektrischen Leiter, vorzugsweise einem elektrisch leitenden Flachverbinder verbunden. Der Anschluss des Flachverbinders kann mittels einem elektrisch leitfähigen Kleber bzw. Klebeelement erfolgen.

Unter einer Tintenschicht ist in diesem Kontext insbesondere zu verstehen, dass die Schicht im Sinne eines Tintenstrahldruckverfahrens oder eines Siebdruckverfahrens aufgebracht werden kann. Somit ist unter einer Tintenschicht vorzugsweise jegliche verarbeitbare Substanz zur Ausbildung einer elektrisch leitfähigen Struktur im Zuge beispielsweise eines Tintenstrahldruckverfahrens zu verstehen.

Darüber hinaus ist vorgesehen, dass die transparente, leitfähige Tintenschicht auf der Zwischenschicht und somit zwischen den Einzelscheiben angeordnet ist. Der Aufdruck bzw. die Aufbringung der Tinten- bzw. Farbschicht ist auf wenigstens eine Seite der Zwischenschicht vorgesehen, die in der zusammengesetzten Fahrzeugscheibe den Einzelscheiben, also der ersten Scheibe bzw. der zweiten Scheibe, entgegengerichtet sind.

Als optionaler Verfahrensschritt kann ferner vorgesehen sein, dass die Zwischenschicht vor dem Aufdrucken auf eine Temperatur vorgewärmt wird, die oberhalb der Raumtemperatur liegt, vorzugsweise jedoch unterhalb von 60°C.

Des Weiteren kann vorgesehen sein, dass die elektrisch leitende Farbschicht bzw. Tintenschicht nach dem Aufdrucken bzw. Aufbringen auf die Zwischenschicht an der Luft, also unter atmosphärischen Bedingungen, getrocknet wird oder in einem Ofen mit einer Temperatur oberhalb der Raumtemperatur, jedoch vorzugsweise unter 60°C, getrocknet wird.

Das Aufdrucken der transparenten, leitfähigen Tintenschicht bzw. Farbschicht kann mittels einem Tintenstrahldruckverfahren oder einem Siebdruckverfahren erfolgen.

Die Offenbarung wird im Folgenden anhand der beigefügten Figuren erläutert.

Hierbei zeigen:
- Fig. 1: eine schematische Ansicht einer ersten Ausführungsform von oben;
- Fig. 2: eine schematische Schnittansicht der Ausführungsform gemäß Fig. 1;
- Fig. 3: eine schematische Schnittansicht einer Ausführungsform der Erfindung;
- Fig. 4: eine schematische Schnittansicht einer weiteren Ausführungsform;
- Fig. 5: eine schematische Schnittansicht einer weiteren Ausführungsform;
- Fig. 6: eine schematische Schnittansicht einer weiteren Ausführungsform der Erfindung;
- Fig. 7: eine schematische Ansicht einer weiteren Ausführungsform der Erfindung in einer Ansicht von oben;
- Fig. 8: eine schematische Ansicht einer weiteren Ausführungsform der Erfindung von oben; und
- Fig. 9: eine schematische Ansicht einer weiteren Ausführungsform der Erfindung von oben.

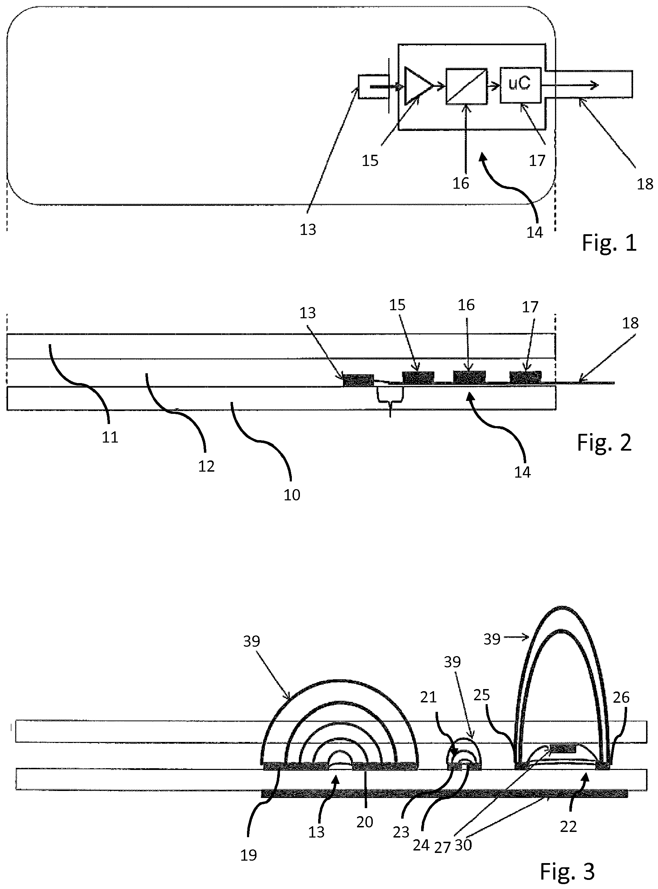

Die Fig. 1 und 2 zeigen eine Ausführungsform einer Fahrzeugscheibe in einer Ansicht von oben bzw. einer schematischen Schnittansicht. Die Fahrzeugscheibe gemäß Fig. 1 und 2 umfasst eine erste (innere) Scheibe 10, eine zweite (äußere) Scheibe 11 sowie eine Zwischenschicht 12 zwischen erster und zweiter Scheibe 10, 11. In der Zwischenschicht 12 ist eine Transducer-Einrichtung 13 in Form eines Sensors angeordnet. Weiterhin ist in der Zwischenschicht 12 eine Transducer-Elektronik 14, umfassend einen Verstärker 15, eine A/D-Wandler 16 sowie einen Mikrocontroller 17 angeordnet. Verstärker 15, A/D-Wandler 16 und Mikrocontroller 17 sind auf bzw. an einer Signalleitung 18 (elektrischen Leitung) angeordnet. Ein Abstand zwischen Transducer-Einrichtung 13 und Transducer-Elektronik 14 ist vergleichsweise klein.

Fig. 3 zeigt eine Ausführungsform der Erfindung in einem schematischen Schnitt mit schematischen Feldlinien 39. Hier ist in der Zwischenschicht 12 eine Transducer-Einrichtung 13 in Form eines Sensors (Feuchtigkeitssensors) dargestellt. Die Transducer-Einrichtung umfasst zwei elektrisch leitende Schichten 19, 20. Weiterhin sind in der Zwischenschicht 12 Kompensationseinrichtungen 21, 22 vorgesehen, die ebenfalls Kapazitäten umfassen, die konkret durch leitende Schichten 23/24 bzw. 25/26 gebildet werden. In der Zwischenschicht 12, oberhalb der leitenden Schichten 25, 26 ist weiterhin eine Abschirmungseinrichtung 27 vorgesehen. Diese blockt insbesondere Feldlinien 39 zwischen den leitenden Schichten 25, 26, die vergleichsweise nahe an einer Außenfläche 28 der zweiten Scheibe 11 verlaufen, blockiert jedoch weiter nach außen dringende Feldlinien nicht (oder nur in einem geringeren Maße).

An einer inneren Oberfläche 29 ist eine weitere Abschirmungseinrichtung 30 vorgesehen, die sowohl die Transducer-Einrichtung 13 als auch die Kompensationseinrichtungen 21, 22 (nach innen, d. h. gegenüber einem Fahrzeuginnenraum) abschirmt. Dazu überdeckt die Abschirmungseinrichtung 30 die Transducer-Einrichtung 13 sowie die Kompensationseinrichtungen 21, 22 (ohne diese zu berühren).

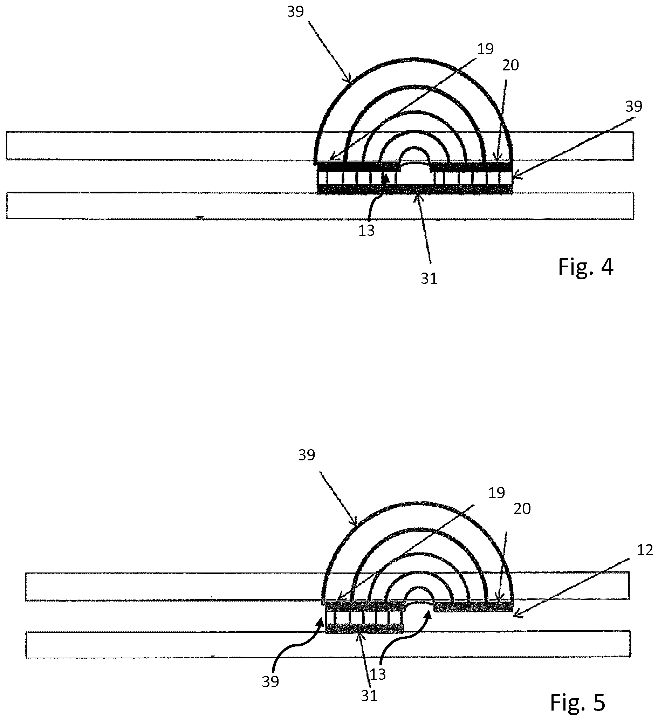

Fig. 4 zeigt eine weitere Ausführungsform in einem schematischen Schnitt. Dort ist in der Zwischenschicht 12 eine Transducer-Einrichtung 13 umfassend leitende Schichten 19, 20 angeordnet. In derselben Zwischenschicht 12 (jedoch in einer beabstandeten Ebene) ist eine leitende Schicht 31 angeordnet.

Die leitende Schicht 31 bildet zunächst eine Kompensationseinrichtung (gemeinsam mit den leitenden Schichten 19, 20) und andererseits auch eine Abschirmung (gegenüber einem Innenraum bezogen auf die Fahrzeugscheibe). Gemäß Fig. 4 überdeckt die leitende Schicht 31 beide leitenden Schichten 19, 20.

In Fig. 5 ist eine weitere Ausführungsform in einem schematischen Schnitt gezeigt. Diese entspricht im Wesentlichen der Ausführungsform gemäß Fig. 4, wobei sich jedoch die leitende Schicht 31 nur über die leitende Schicht 19 (und nicht über die leitende Schicht 20) erstreckt.

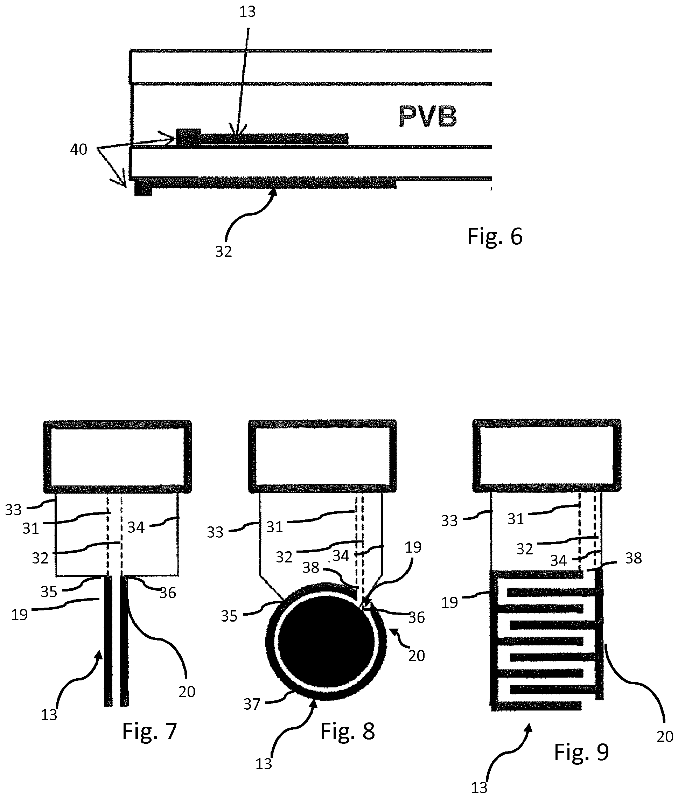

Fig. 6 zeigt eine weitere Ausführungsform der Erfindung. Hier ist in der Zwischenschicht 12 eine Transducer-Einrichtung 13 vorgesehen. An einer Oberfläche der ersten Scheibe 10 (zu einem Fahrzeuginneren hin) ist eine Abschirmungseinrichtung 32, ähnlich zu der Abschirmungseinrichtung 32 gemäß Fig. 3 (jedoch ohne die dortigen Kompensationseinrichtungen 21, 22, die jedoch auch in der Ausführungsform gemäß Fig. 6 vorgesehen sein können) gezeigt. Transducer-Einrichtung 13 und Abschirmungseinrichtung 32 sind vorzugsweise über Kontakte 40 elektrisch angeschlossen.

In sämtlichen Ausführungsformen kann die Zwischenschicht 12 durch einen (elektrisch isolierenden) Kunststoff, insbesondere (Schmelz-) Klebstoff und/oder einen Kunststoff basierend auf Polyvinylacetal, vorzugsweise Polyvinylbutyral (PVB) gebildet sein.

Fig. 7 zeigt eine weitere Ausführungsform der Erfindung. Dort ist eine Transducer-Einrichtung 13 mit zwei (streifenförmigen) leitenden Schichten 19, 20 gezeigt (die gemeinsam eine Kapazität ausbilden). Die leitenden Schichten 19, 20 verlaufen parallel zueinander. Gestrichelt gezeichnet sind (nicht-erfindungsgemäße) Anschlussleitungen 31, 32, die zu einer Transducer-Elektronik 14 führen, wie sie im Stand der Technik vorgesehen sein könnten. Erfindungsgemäß sind demgegenüber Anschlussleitungen 33, 34 gezeigt. Diese entfernen sich, ausgehend von Kontaktstellen 35, 36 (abschnittsweise) voneinander, so dass ein Abstand der Anschlussleitungen 33, 34 gegenüber den konventionellen Anschlussleitungen 31, 32 (deutlich) vergrößert ist.

Fig. 8 zeigt eine weitere Ausführungsform der Erfindung. Hier sind leitende Schichten 19, 20 vorgesehen (die gemeinsam eine Kapazität ausbilden). Die leitende (innere) Schicht 19 ist kreisförmig ausgebildet. Die leitende (äußere) Schicht 20 ist ring-förmig ausgebildet, wobei die Ringform unterbrochen ist, so dass die innere leitende Schicht 19 (in derselben Ebene) kontaktiert werden kann. Gestrichelt gezeigt sind hier wiederum Anschlussleitungen 31, 32, wie sie im Stand der Technik vorgesehen sein könnten. Die erfindungsgemäßen Anschlussleitungen 33, 34 sind als durchgezogene Linien gezeichnet. Wie man in Fig. 8 erkennt, entfernen sich auch diese Anschlussleitungen 33, 34 (abschnittsweise) voneinander. Weiterhin sind die Kontaktstellen 35, 36 in einem vergleichsweise großen Abstand zueinander (im Vergleich zu entsprechenden Kontaktstellen, die sich anhand der gestrichelten Linien 31, 32 ableiten lassen). Die Kontaktstelle 36 ist hier (zumindest im Wesentlichen) durch die Struktur der leitenden Schichten vorgegeben. Ganz bewusst wird nun die Kontaktstelle 35 vergleichsweise weit entfernt davon realisiert, vorzugsweise in einem Abstand, der mehr als 20 % eines maximal möglichen Abstandes entspricht, der sich beispielsweise ergäbe, wenn eine Kontaktstelle bei der Position 37 vorgesehen wäre. Dadurch kann auf einfache Art und Weise erreicht werden, dass die Anschlussleitungen 33, 34 vergleichsweise weit auseinanderliegen.

Fig. 9 zeigt eine weitere Ausführungsform der Erfindung. Auch hier sind wiederum Anschlussleitungen 31, 32 gestrichelt gezeichnet, wie sie im Stand der Technik vorgesehen sein könnten. Demgegenüber sind die die erfindungsgemäßen Anschlussleitungen 33, 34 weiter voneinander beabstandet. Dies wird hier insbesondere dadurch erreicht, dass Kontaktstellen 35, 36 (ähnlich zu der Ausführungsform gemäß Fig. 8) so gewählt werden, dass sie vergleichsweise weit auseinanderliegen. Insbesondere ist die Kontaktstelle 35 beabstandet von einem Ende 38 der leitenden Schicht 19 angeordnet. Auch hier ist der Abstand zwischen Kontaktstellen 35, 36 wieder größer als eigentlich zur Kontaktierung notwendig, insbesondere mindestens 20 % eines maximal möglichen Abstandes.

### Bezugszeichenliste

- 10: erste (innere) Scheibe
- 11: zweite (äußere) Scheibe
- 12: Zwischenschicht
- 13: Transducer-Einrichtung
- 14: Transducer-Elektronik
- 15: Verstärker
- 16: A/D-Wandler
- 17: Mikrocontroller
- 18: Signalleitung
- 19: leitende Schicht
- 20: leitende Schicht
- 21: Kompensationseinrichtung
- 22: Kompensationseinrichtung
- 23: leitende Schicht
- 24: leitende Schicht
- 25: leitende Schicht
- 26: leitende Schicht
- 27: Abschirmungseinrichtung
- 28: äußere Oberfläche
- 29: innere Oberfläche
- 30: Abschirmungseinrichtung
- 31: leitende Schicht
- 32: Abschirmungseinrichtung
- 33: Anschlussleitung
- 34: Anschlussleitung
- 35: Kontaktstelle
- 36: Kontaktstelle
- 37: Position
- 38: Ende
- 39: Feldlinie
- 40: Kontakt

## Patentansprüche

1. Fahrzeugscheibe, umfassend
- mindestens eine Transducer-Einrichtung (13) mit einem Sensor, welche eine Kapazität umfasst, deren Kapazitätswert abhängig von äußeren Einflüssen schwankt,
- eine der Transducer-Einrichtung (13) zugeordnete Transducer-Elektronik (14),
wobei sowohl die Transducer-Einrichtung (13) als auch die Transducer-Elektronik (14) vollständig innerhalb der Fahrzeugscheibe angeordnet sind,
- eine der Transducer-Einrichtung (13) zugeordnete elektrische Abschirmungseinrichtung (27, 30, 32) zur elektrischen Abschirmung der Transducer-Einrichtung (13) gegenüber einem Fahrzeuginneren oder einem Fahrzeugäußeren,
wobei
- die Transducer-Einrichtung (13) und die Abschirmungseinrichtung zumindest abschnittsweise transparent sind.

2. Fahrzeugscheibe nach Anspruch 1, bei welcher die elektrische Abschirmungseinrichtung (27, 30, 32) mindestens eine elektrisch leitende Schicht umfasst.

3. Fahrzeugscheibe nach Anspruch 1 oder 2, bei welcher die elektrische Abschirmungseinrichtung (27, 30, 32) elektrisch isoliert ist oder auf Erdpotential oder auf einer Versorgungsspannung oder auf einem sonstigen Bezugspotential gehalten.

4. Fahrzeugscheibe nach einem der vorherigen Ansprüche 1 bis 3, bei welcher die elektrische Abschirmungseinrichtung (27, 30, 32) auf einer Innenseite oder einer Außenseite der Fahrzeugscheibe, vorzugsweise die Transducer-Einrichtung (13) zumindest teilweise überdeckend, angeordnet ist.

5. Fahrzeugscheibe nach einem der Ansprüche 1 bis 4, welche eine der Transducer-Einrichtung (13) zugeordnete und zumindest teilweise innerhalb der Fahrzeugscheibe angeordnete Kompensationseinrichtung (21, 22) aufweist.

6. Fahrzeugscheibe nach Anspruch 5, bei welcher die Kompensationseinrichtung (21, 22) zumindest abschnittsweise transparent ist.

7. Fahrzeugscheibe nach einem der vorherigen Ansprüche 5 oder 6, bei welcher die Kompensationseinrichtung (21, 22) mindestens eine elektrisch leitende Schichtumfasst.

8. Fahrzeugscheibe nach Anspruch 7, bei welcher die Kompensationseinrichtung (21, 22) mindestens zwei elektrisch leitende Schichten umfasst, wobei die zwei elektrisch leitenden Schichten voneinander isoliert sind und in einer Ebene oder verschiedenen Ebenen angeordnet.

9. Fahrzeugscheibe nach Anspruch 7 oder 8, bei welcher die Kompensationseinrichtung (21, 22) eine Kapazität umfasst, wobei die Kapazität vorzugsweise zwei elektrisch leitende Schichten umfasst, die voneinander isoliert sind.

10. Fahrzeugscheibe nach einem der vorherigen Ansprüche 1 bis 9, wobei die Transducer-Einrichtung (13) und die Transducer-Elektronik (14) einen Abstand von weniger als 5 cm, vorzugsweise weniger als 2 cm zueinander aufweisen.

11. Fahrzeugscheibe nach einem der vorherigen Ansprüche 1 bis 10, umfassend der Transducer-Einrichtung (13) zugeordnete elektrische Anschlussleitungen (33, 34), wobei die elektrischen Anschlussleitungen zumindest abschnittsweise einen vergrößerten Abstand zueinander aufweisen,
wobei der vergrößerte Abstand dadurch erzielt wird, dass sich die Anschlussleitungen (33, 34) über ihren Verlauf abschnittsweise voneinander entfernen und/oder dass mindestens eine Anschlussleitung (33, 34) von einem Ende eines leitenden Abschnittes der Transducer-Einrichtung (13) beabstandet mit dem jeweiligen Abschnitt kontaktiert ist.

12. Fahrzeugscheibe nach einem der vorherigen Ansprüche 1 bis 11, wobei die Transducer-Einrichtung (13) und die Transducer-Elektronik (14) vollständig zwischen zwei übereinander angeordneten Einzelscheiben (10, 11), der Fahrzeugscheibe angeordnet sind.

13. Fahrzeugscheibe nach einem der vorherigen Ansprüche 1 bis 12, wobei der Sensor ein Feuchtigkeitssensor ist.

14. Fahrzeug, insbesondere Kraftfahrzeug, vorzugsweise Personen- oder Lastkraftwagen oder Bus, oder Zug oder Schiff, umfassend eine Fahrzeugscheibe nach einem der vorherigen Ansprüche 1 bis 13.

15. Verfahren zu Herstellung einer Fahrzeugscheibe nach einem der vorhergehenden Ansprüche 1 bis 13, die folgenden Schritte aufweisend:
- Bereitstellen von zwei übereinander anzuordnenden Einzelscheiben (10, 11) und einer dazwischen anzuordnenden Zwischenschicht (12);
- Aufdrucken einer transparenten, leitfähigen Tintenschicht zur Ausbildung einer kapazitiven Sensoranordnung auf wenigstens eine Seite der Zwischenschicht (12);
- Kontaktieren der transparenten, leitfähigen Tintenschicht mit einem elektrischen Leiter; und
- Übereinander anordnen und Laminieren der Einzelscheiben (10, 11) und der dazwischen liegenden Zwischenschicht (12), zur Ausbildung der Fahrzeugscheibe.

## Claims

1. Vehicle window, comprising
- at least one transducer device (13) having a sensor, which includes a capacitor, whose capacitance value fluctuates depending on external influences,
- transducer electronics (14) associated with the transducer device (13),
wherein both the transducer device (13) and the transducer electronics (14) are arranged completely within the vehicle window,
- an electrical shielding device (27, 30, 32) associated with the transducer device (13) for electrically shielding the transducer device (13) relative to a vehicle interior or a vehicle exterior,
wherein
- the transducer device (13) and the shielding device (30, 32) are transparent, at least in sections.

2. Vehicle window according to claim 1, wherein the electrical shielding device (27, 30, 32) comprises at least one electrically conductive layer.

3. Vehicle window according to claim 1 or 2, wherein the electrical shielding device (27, 30, 32) is electrically isolated or is held at earth potential or at a supply voltage or at some other reference potential.

4. Vehicle window according to one of the preceding claims 1 through 3, wherein the electrical shielding device (27, 30, 32) is arranged on an inner side or an outer side of the vehicle window, preferably at least partially overlapping the transducer device (13).

5. Vehicle window according to one of the preceding claims 1 through 4, which comprises a compensating device (21, 22) associated with the transducer device (13), which is are arranged at least partially within the vehicle window.

6. Vehicle window according to claim 5, wherein the compensating device (21, 22) is transparent, at least in sections.

7. Vehicle window according to one of the preceding claims 5 or 6, in which the compensating device (21, 22) comprises at least one electrically conductive layer.

8. Vehicle window according to claim 7, in which the compensating device (21, 22) comprises at least two electrically conductive layers, wherein the two electrically conductive layers are isolated from one another and are arranged in one plane or in different planes.

9. Vehicle window according to claim 7 or 8, in which the compensating device (21, 22) comprises a capacitor, wherein the respective capacitor preferably comprises two electrically conductive layers that are isolated from one another.

10. Vehicle window according to one of the preceding claims 1 through 9, wherein the transducer device (13) and the transducer electronics (14) have a distance of less than 5 cm, preferably less than 2 cm from one another.

11. Vehicle window according to one of the preceding claims 1 through 10, comprising electrical connection lines (33, 34) associated with the transducer device (13), wherein the electrical connection lines have, at least in sections, an increased distance from one another, wherein the increased distance is achieved in that the connection lines (33, 34) are moved away from one another, in sections, over their course and/or in that at least one connection line (33, 34) is in contact with a conductive section of the transducer device (13) at a distance from one end of the respective section.

12. Vehicle window according to one of the preceding claims 1 through 11, wherein the transducer device (13) and the transducer electronics (14) are completely arranged between two individual panes (10, 11) of the vehicle window arranged one above the other.

13. Vehicle window according to one of the preceding claims 1 through 12, wherein the sensor is a moisture sensor.

14. Vehicle, in particular a motor vehicle, preferably a passenger car or a truck or a bus, or a train or a watercraft, including a vehicle window according to one of the preceding claims 1 through 13.

15. Method for producing a vehicle window according to one of the preceding claims 1 through 13, having the following steps:
- providing of two individual panes (10, 11) to be arranged one above the other and an intermediate layer (12) to be arranged therebetween;
- printing a transparent, conductive ink layer for forming a capacitive sensor arrangement on at least one side of the intermediate layer (12);
- contacting the transparent, conductive ink layer with an electrical conductor; and
- superimposing and laminating the individual panes (10, 11) and the interpositioned intermediate layer (12) for forming the vehicle window.

## Revendications

1. Fenêtre de véhicule comprenant
- au moins un dispositif de transduction (13) comportant un capteur, qui inclut un condensateur, dont la valeur de capacité fluctue en fonction des influences extérieures,
- une électronique de transduction (14) associée au dispositif de transduction (13),
dans lequel le dispositif de transduction (13) et l'électronique de transduction (14) sont entièrement disposés à l'intérieur de la fenêtre du véhicule,
- un dispositif de blindage électrique (27, 30, 32) associé au dispositif de transduction (13) pour le blindage électrique du dispositif de transduction (13) par rapport à l'intérieur ou à l'extérieur du véhicule,
dans lequel
- le dispositif de transduction (13) et le dispositif de blindage (30, 32) sont transparents, au moins en partie.

2. Fenêtre de véhicule selon la revendication 1, dans laquelle le dispositif de blindage électrique (27, 30, 32) comprend au moins une couche conductrice d'électricité.

3. Fenêtre de véhicule selon la revendication 1 ou 2, dans laquelle le dispositif de blindage électrique (27, 30, 32) est isolé électriquement ou est maintenu au potentiel de la terre ou à une tension d'alimentation ou à un autre potentiel de référence.

4. Fenêtre de véhicule selon l'une des revendications précédentes 1 à 3, dans laquelle le dispositif de blindage électrique (27, 30, 32) est disposé sur un côté intérieur ou extérieur de la fenêtre de véhicule, de préférence en recouvrant au moins partiellement le dispositif de transduction (13).

5. Fenêtre de véhicule selon l'une des revendications précédentes 1 à 4, qui comprend un dispositif de compensation (21, 22) associé au dispositif de transduction (13), qui est disposé au moins partiellement à l'intérieur de la fenêtre de véhicule.

6. Fenêtre de véhicule selon la revendication 5, dans laquelle le dispositif de compensation (21, 22) est transparent, au moins en partie.

7. Fenêtre de véhicule selon l'une des revendications précédentes 5 ou 6, dans laquelle le dispositif de compensation (21, 22) comprend au moins une couche conductrice d'électricité.

8. Fenêtre de véhicule selon la revendication 7, dans laquelle le dispositif de compensation (21, 22) comprend au moins deux couches électriquement conductrices, les deux couches électriquement conductrices étant isolées l'une de l'autre et disposées dans un plan ou dans des plans différents.

9. Fenêtre de véhicule selon la revendication 7 ou 8, dans laquelle le dispositif de compensation (21, 22) comprend un condensateur, dans lequel le condensateur respectif comprend de préférence deux couches électriquement conductrices qui sont isolées l'une de l'autre.

10. Fenêtre de véhicule selon l'une des revendications précédentes 1 à 9, dans laquelle le dispositif de transduction (13) et l'électronique de transduction (14) ont une distance inférieure à 5 cm, de préférence inférieure à 2 cm l'un de l'autre.

11. Fenêtre de véhicule selon l'une des revendications précédentes 1 à 10, comprenant des lignes de connexion électrique (33, 34) associées au dispositif de transducteur (13), dans lequel les lignes de connexion électrique ont, au moins en sections, une distance accrue l'une par rapport à l'autre,
dans laquelle la distance accrue est obtenue en ce que les lignes de connexion (33, 34) sont éloignées les unes des autres, par sections, au cours de leur parcours et/ou en ce qu'au moins une ligne de connexion (33, 34) est en contact avec une section conductrice du dispositif transducteur (13) à une certaine distance d'une extrémité de la section respective.

12. Fenêtre de véhicule selon l'une des revendications précédentes 1 à 11, dans laquelle le dispositif de transduction (13) et l'électronique de transduction (14) sont entièrement disposés entre deux vitres individuelles (10, 11) de la fenêtre de véhicule disposées l'une au-dessus de l'autre.

13. Fenêtre de véhicule selon l'une des revendications précédentes 1 à 12, dans laquelle le capteur est un capteur d'humidité.

14. Véhicule, en particulier véhicule à moteur, de préférence voiture particulière ou camion ou autobus, ou train ou bateau, comprenant une fenêtre de véhicule selon l'une des revendications précédentes 1 à 13.

15. Procédé de fabrication d'une fenêtre de véhicule selon l'une des revendications précédentes 1 à 13, comportant les étapes suivantes :
- la fourniture de deux vitres individuelles (10, 11) superposées et d'une couche intermédiaire (12) placée entre les deux ;
- l'impression d'une couche d'encre transparente et conductrice pour la formation d'un capteur capacitif sur au moins un côté de la couche intermédiaire (12) ;
- mettre en contact la couche d'encre transparente et conductrice avec un conducteur électrique ; et
- superposer et laminer les différentes vitres (10, 11) et la couche intermédiaire interposée (12) pour former la fenêtre du véhicule.
